# EUROPEAN PATENT SPECIFICATION

(11) **EP 3 120 478 B1**
(45) Date of publication and mention of the grant of the patent: **10.04.2024**
(21) Application number: 14714205.3
(22) Date of filing: 21.03.2014
(51) Int. Cl.: H04L 1/18, H04W 36/18

(54) **HARQ OPTIMIZATION FOR TDM MODE**
HARQ-OPTIMIERUNG FÜR TDM-MODUS
OPTIMISATION DE HARQ POUR MODE TDM

(43) Date of publication of application: 25.01.2017
(73) Proprietor: Nokia Solutions and Networks Oy, 02610 Espoo (FI)
(72) Inventor: JANUSZEWSKI, Maciej, PL-64-920 Pila (PL); SEREBRYAKOV, Grigory, Nizhny Novgorod 603024 (RU); RANTA-AHO, Karri Markus, FI-02600 Espoo (FI); TRUSHANIN, Alexey, Nizhny Novgorod 603024 (RU)
(74) Representative: Page White Farrer
(86) International application number: PCT/EP2014/055720
(87) International publication number: WO 2015/139772

(56) References cited:
- EP-A1- 1 755 355
- US-A1- 2006 146 762
- US-A1- 2006 203 780
- US-A1- 2011 134 829
- US-A1- 2014 036 808
- BROADCOM CORPORATION: "TP on TDM Scheduling Solutions", 3GPP DRAFT; R1-134831 TP ON TDM SCHEDULING SOLUTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou; 20131007 - 20131011 6 November 2013 (2013-11-06), XP050750481, Retrieved from the Internet: URL:http://www.3gpp.org/ftp/tsg_ran/WG1_RL 1/TSGR1_74b/Docs/ [retrieved on 2013-11-06]
- HUAWEI ET AL: "Improved granting for TDM operation", 3GPP DRAFT; R1-140688 IMPROVED GRANTING FOR TDM OPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050736206, Retrieved from the Internet: URL:http://www.3gpp.org/ftp/Meetings_3GPP_ SYNC/RAN/RAN1/Docs/ [retrieved on 2014-02-09]

## Description

### Field of the invention

The present invention relates to an apparatus, a method, and a computer program product related to data communication. More particularly, the present invention relates to an apparatus, a method, and a computer program product related to HARQ.

### Background of the invention

### Abbreviations

- 3GPP: 3^{rd} Generation Partnership Project
- ACK: Acknowledge
- CRC: Cyclic Redundancy Check
- DPCCH: Dedicated Physical Control Channel
- eNB: Evolved Node B
- E-AGCH: Enhanced Absolute Grant Channel
- E-DCH: Enhanced Dedicated Channel
- E-DPDCH: Enhanced Dedicated Physical Data Channel
- E-HICH: E-DCH HARQ Indicator Channel
- E-RGCH: Enhanced Relative Grant Channel
- E-RNTI: E-DCH RNTI
- EUL: Enhanced Uplink
- E-UTRAN: Evolved UTRAN
- FDD: Frequency Division Duplex
- HARQ: Hybrid Automatic Repeat Request
- HS-SCCH: High-Speed Shared Control Channel
- HSDPA: High Speed Downlink Packet Access
- HSUPA: High Speed Uplink Packet Access
- LTED: Long Term Evolution
- LTE-AD: Long Term Evolution- Advanced
- NB, NodeB: Base Station in 3GPP terminology
- NBAP: NodeB Application Part
- OSI: Open Systems Interconnection
- OVSF: Orthogonal Variable Spreading Factor
- RNC: Radio Network Controller
- RNTI: Radio Network Temporary Identifier
- RoT: Rise over Thermal
- RRC: Radio Resource Control
- RSN: Retransmission Sequence Number
- SI: Scheduling Information
- TDM: Time Division Multiplex
- TR: Technical Report
- TTI: Transmission Timing Interval
- UE: User Equipment
- UL: Uplink
- UMTS: Universal Mobile Telecommunication System
- UTRAN: UMTS RAN
- WCDMA: Wideband Code Division Multiplex Access
- WiFiD: Wireless Fidelity

Time division multiplexing (TDM) operation in High Speed Uplink Packet Access (HSUPA) is one of the topics considered within the Work Item on Further Enhancements to Enhanced Uplink being held in 3GPP RAN1 (e.g. RP-132078: "New Work Item proposal: Further EUL enhancements", Ericsson™, RAN #62). The TDM scheduling refers to a situation in which one or several selected User Equipment entities (UEs) in a given cell consume most of the Rise over the Thermal (RoT) budget by transmitting with a high data rate for the duration of a scheduling period (which may last from several Transmission Time Intervals (TTIs) to several tens/hundreds of TTIs), while at the same time other UEs either stop their transmission or their transmission consumes significantly less power resources. Since it has been proven that uplink TDM operation can bring substantial performance gains several standard changes have been proposed within the Work Item in order to facilitate efficient TDM operation in HSUPA.

One of the proposals (originally made by NSN^{™}, see PCT/EP2013/059565) is as follows:
TDM scheduling can be realized in the conventional 3GPP WCDMA system. However, the signalling overhead is significant. It is assumed that in the TDM mode the base station (NodeB) has to nominate one UE which will transmit for the next period, while another UE transmitting in the previous period has to be informed that it has to stop the transmission. For that 2 commands have to be issued:
1. E-AGCH with either ZERO, INACTIVE or very low Absolute Grant Value addressing the UE transmitting in the previous period
2. E-AGCH with Absolute Grant Value for a UE nominated to transmit in the next period. Typically, in TDM mode, the absolute grant value is relatively high.

In this example it is assumed that further UEs in the cell are not transmitting data or transmit low data rates.

After sending the ZERO-grant to currently transmitting UE one TTI is lost (no UE transmitting with high datarate in the next TTI) before the next UE receives and applies new absolute grant because only one absolute grant may be transmitted per TTI. This reduces gains coming from the TDM scheduling.

According to the proposal, the signalling overhead is reduced and/or the problem of not utilized TTls in case of TDM scheduling is solved.

Conventionally, in HSUPA, all active UEs monitor the E-AGCH channel. When a transmission occurs each UE tries to decode the grant message by performing a CRC check with its E-RNTI, which is associated uniquely to each UE in the cell. If a UE successfully decodes the grant it starts the grant update procedure (set their Serving Grant to the value indicated in the grant message).

According to the proposal, all other UEs who receive an E-AGCH transmission which is not intended for them (the CRC check fails) automatically set their Serving Grants to zero. This way a single E-AGCH command would provide an absolute grant for one UE and at the same time silence other UEs in a cell.

According to the proposal, the E-AGCH for TDM UEs may be transmitted using dedicated OVSF code. This ensures that grant signalling to legacy UEs does not interfere with grant signalling for TDM. US 2006/146762 A1 discloses a wireless communication, in which mobile and base stations setup uplink and downlink channels, and the mobile station transmits data flows. The base station interrupts transmission via the downlink setup with the mobile station in the predetermined transmission interruption time interval.

The mobile station determines, in response to the data flow, packet transmission in a first transmission time interval for the predetermined time interval determined from the transmission interruption time interval or re-transmission of the packets transmitted in the first transmission time interval. The mobile station transmits packets in response to the determination. The base station transmits an arrival confirmation signal for the transmitted packets. The mobile station performs re-transmission in response to the arrival confirmation signal or to the determination.

### Summary of the invention

It is an object of the present invention to improve the prior art.

The present invention is defined by the appended independent claims. Certain more specific aspects are defined by the dependent claims.

### Brief description of the drawings

Further details, features, objects, and advantages are apparent from the following detailed description of the preferred examples of the present invention which is to be taken in conjunction with the appended drawings, wherein
Fig. 1 shows conventional TTI scheduling;
Fig. 2 shows an apparatus according to an example of the invention;
Fig. 3 shows a method according to an example of the invention;
Fig. 4 shows an apparatus according to an example of the invention;
Fig. 5 shows a method according to an example of the invention; and
Fig. 6 shows an apparatus according to an example of the invention;
Fig. 7 shows a method according to an example of the invention;
Fig. 8 shows an apparatus according to an example of the invention;
Fig. 9 shows a method according to an example of the invention; and
Fig. 10 shows an apparatus according to an example of the invention.

### Detailed description of certain examples

Herein below, certain examples of the present invention are described in detail with reference to the accompanying drawings, wherein the features of the examples can be freely combined with each other unless otherwise described. However, it is to be expressly understood that the description of certain examples is given for by way of example only, and that it is by no way intended to be understood as limiting the invention to the disclosed details.

Moreover, it is to be understood that the apparatus is configured to perform the corresponding method, although in some cases only the apparatus or only the method are described.

There are several other aspects of TDM operation that are still to be addressed. One of the remaining problems is the HARQ operation in the TDM mode. Examples of the following improve HARQ mechanism design in order to provide better TDM performance.

In the TDM mode, UEs are scheduled in such a way that they take turns in transmitting the uplink data and their transmission do not interfere with each other. However, HARQ functionality in HSUPA dictates that the retransmission of unsuccessfully received packet should take place in the same HARQ process at a predefined time after the previous transmission (e.g. 8 TTls after the initial transmissions in case of 2 ms TTI). A UE performs the retransmission automatically in the corresponding TTI if it does not receive a confirmation of correctly received packet.

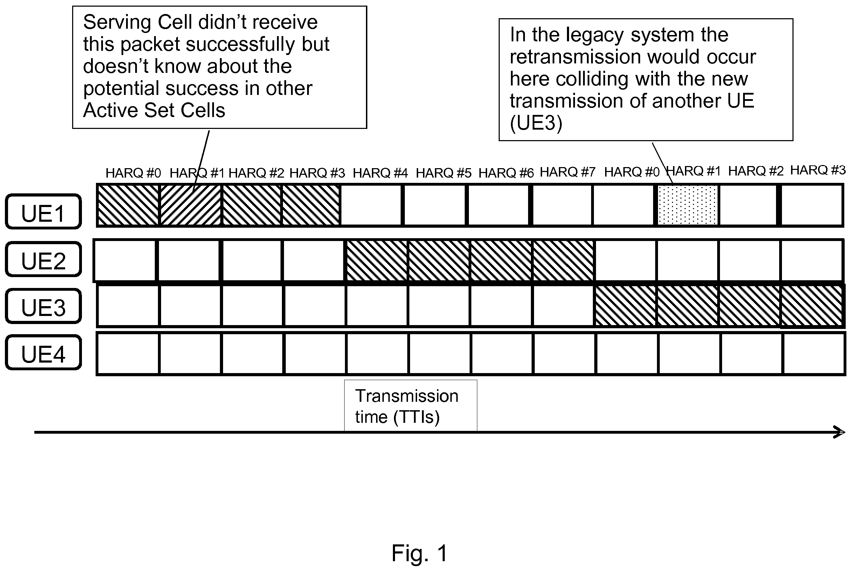

The confirmation (ACK) may be received either from the serving cell or another cell from the active set. When working in TDM fashion it is possible that, at the time of retransmission, another UE will have its turn of transmitting with a high data rate and consuming all or majority of the cell resources. In such a case both the new transmission and the retransmission would interfere strongly with each other and potentially neither of them would be successful. This scenario is depicted in Fig. 1.

Fig. 1 shows the conventional scheduling of TTls over 3 UEs (no TTI is scheduled for the fourth UE (UE4)). Each box represents a TTI and its scheduling state for a respective UE. If the box is hashed it is scheduled for the UE, if it is blank it is not scheduled for the UE. If the box is dotted, it is not scheduled for the UE to transmit a new packet. Every 8 TTIs, the corresponding HARQ processes are repeated.

UE1 transmits in TTIs #0 to #3, corresponding to HARQ processes #0 to #3), UE2 transmits in TTIs #4 to 7, corresponding to HARQ processes #4 to #7. UE #3 transmits in TTIs #8 to #11, corresponding to HARQ processes #0 to #3. At each TTI, only one of UE1 to UE3 transmits initially.

However, the transmission of UE1 in TTI #1 fails (indicated by a different direction of the hashing). Accordingly, UE1 repeats its transmission in TTI #9, which is the TTI of the same HARQ process #1. Hence, in TTI #9, there are two simultaneous transmissions: the initial transmission of UE3 and the re-transmission of UE1. Since both transmissions occur with high power, they may strongly interfere with each other.

This problem has been already identified in 3GPP TR 25.700 "Study of Further Enhanced Uplink (EUL) enhancements", v12.0.0. It was mentioned that in such a scenario the scheduler could either prioritize initial transmissions or retransmissions. Prioritizing of retransmissions means that, in the above example, the scheduler prepares for a retransmission and deactivates the transmission of other UEs (UE3 in this case) for a TTI when it expects a retransmission because the original transmission was not received correctly by that cell.

However, if the UE1 is in Soft Handover (which may happen e.g. in at least 30% of cases) the serving cell does not know if the packet was received by one of the cells in the active set of UE1. If it was successfully received by one of these cells there is no need for a retransmission. Hence, the serving cell does not know whether it should prepare for a retransmission.

As one option, the serving cell could prepare for a retransmission irrespectively of the outcome of the reception at the other cells of the active set but that would lead to a waste of resources in case of reception success in at least one of the cells of the active set.

On the other hand, prioritizing new transmissions would mean that a UE would not perform a retransmission if it had received a "Zero Grant" after the first transmission. Instead it would keep the packet to be retransmitted in the HARQ buffer until it again receives an Absolute Serving grant valid for the given HARQ process.

As explained above, the serving cell does not always know whether or not there is a need of a retransmission. Hence, in a scenario prioritizing new transmissions, in soft handover operation the serving cell learns about the need of retransmission only when it actually takes place (UE sends a packet with the RSN corresponding to a retransmission). Accordingly, the scheduler does not know whether to keep on scheduling new UEs, or whether to come back to a UE which potentially has a retransmission to be performed. This may be of particular disadvantage if it is known from the prior scheduling information that the UE requiring a re-transmission does not have any new data to be scheduled. In this case, re-transmission may have to wait for a very long time.

According to examples, the base station (e.g. eNB or NB) gets informed by the UE if a retransmission is required, e.g. by signaling. One example of such signaling is signaling the scheduling information (SI). Accordingly, the base station may schedule a grant for the retransmission if needed and/or may not schedule a grant just for retransmission if not needed.

According to examples, on the UE side, one of the following procedures may be performed:
The UE monitors if a packet is not acknowledged as correctly received (ACK on E-HICH missing) by any of the cells from the active set and the UE's serving grant expired in the meantime or was set to "Zero Grant" or "inactive". In addition, in some embodiments, UE may check if the predetermined maximum number of transmission attempts was not reached. Then, the UE does not retransmit automatically, as it would do in a legacy case. Instead, it may perform one of the following two routines:
1) The UE signals to the serving cell that a retransmission (and possibly also indication of which HARQ process) is needed. This signaling could be performed by sending the Scheduling Information (SI) message to the serving cell. The SI message could point to the given HARQ process by a timing association or it could explicitly contain information pointing to the HARQ process that awaits a retransmission.
2) The UE discards the packet. I.e., the UE does not foresee the packet for retransmitting any more. E.g., this may be done by setting the number of retransmissions to the maximum number of allowed retransmissions irrespective of the actual number of retransmissions. In this case, the respective higher layer application may decide how to proceed further with the packet which could not be transmitted successfully. Hence, the UE leaves it to the higher layer to decide whether or not to retransmit the packet if the Serving Grant was passed to another UE after the initial unsuccessful transmission. In addition, the UE may flush its HARQ buffer.

If the higher layer application decides that the packet is to be transmitted again, this will be handled by layers 1 and 2 in the same way as transmitting any other (new) packet.

The maximum number of retransmissions is a natural number such as 1, 2, 3, or more. For example, assume that the maximum number of retransmissions is 1. If the first transmission of a packet seems to fail from UE perspective (no ACK received) and there is no grant scheduled for retransmission, the UE does not retransmit the packet, but nevertheless the number of retransmissions will be set to 1.

Higher layer application is an application of layer 3 and above, preferably of layer 4 or above, wherein layers 1 to 3 are the physical layer, the data link layer, and the network layer of the OSI layer model, respectively.

Some examples comprise a mechanism of switching between the legacy HARQ operation (automatic retransmissions until ACK on E-HICH received or maximum number of retransmissions is reached) and one of the schemes described in 1) and 2). Each of the legacy HARQ operation and the operation according to one of the schemes described in 1) and 2) may also be denoted as a HARQ mode.

In some examples, the network (represented by e.g. the base station or a controller such as a RNC) may decide which HARQ mode will be performed by the UE. The network will instruct the UE on the decision, and the UE will obey this instruction.

For example, the RNC may decide on the HARQ mode as part of the RRC-layer configuration. The RNC sends an RRC message (as payload through NodeB) to the UE. The RNC may also inform the Node B with NBAP message of the UE's mode. Then the radio communication between the UE and the NodeB may be performed in the HARQ mode decided by the RNC.

In another example, NodeB takes the decision on the HARQ mode and signals it directly to the UE over the air. A typical way for the signaling would be to use shared control channel order such as an HS-SCCH order, similar to those used e.g. for activating and deactivating carriers when the UE is in multicarrier HSDPA mode.

In yet another example, NodeB may indicate the desired HARQ mode over NBAP to the RNC. This could be e.g. a NodeB capability indication telling the RNC whether the new mode is supported. Then, the RNC configures the UE such that it operates in the desired HARQ mode (e.g. by an RRC message).

The RNC may configure the HARQ mode for a single UE, for a group of UEs, or for all UEs.

In some examples, the UE may decide on the HARQ mode it will perform. The UE may inform the network on the decision.

In some examples, UE and network will decide independently from each other on the HARQ mode to be performed by the UE. In these examples, UE and network decide based on the same condition, which is known to both UE and network. Thus, signaling of the HARQ mode between the network and UE is not required.

An example condition to switch to one of the HARQ modes described in 1) and 2) may be that the UE is in soft handover, which is an example of a handover status. The UE may decide this based on the number of cells in the active set. Also, the network is aware if the UE is in soft handover. Another example condition is a certain service type the UE is using. This condition may be known to both UE and network, too.

The network may also decide based on different metrics that the network wants to optimize (e.g. delay, cell throughput, etc.).

Furthermore, the network may know if a UE is capable of working according to one of the HARQ modes described in 1) and 2). Thus, it may instruct only UEs capable of the HARQ modes described in 1) and 2) to operate according to one of these schemes but it may not instruct other UEs.

If the base station is aware that UE will send a request to schedule for a retransmission if needed (i.e., an information that ACK was not received for a packet, HARQ mode described in 1)), it may typically prioritize new transmissions.

Embodiments of the invention may solve all above identified problems of HARQ mechanism in TDM mode in HSUPA. The serving cell scheduler may prioritize retransmissions (e.g. for delay optimization) using the legacy HARQ mechanism - performing the retransmissions automatically. In order to maximally optimize the TDM performance, UE may not retransmit automatically. Then, in case of a soft handover operation, it may signal to the serving cell that a retransmission is pending, thus providing information to the scheduler which enables much more flexibility and allows for maximum scheduling gain. For less delay sensitive services a UE could be instructed to flush the HARQ process buffer immediately after the initial transmission failure to maximally simplify the implementation and at the same time preserve the scheduling gains.

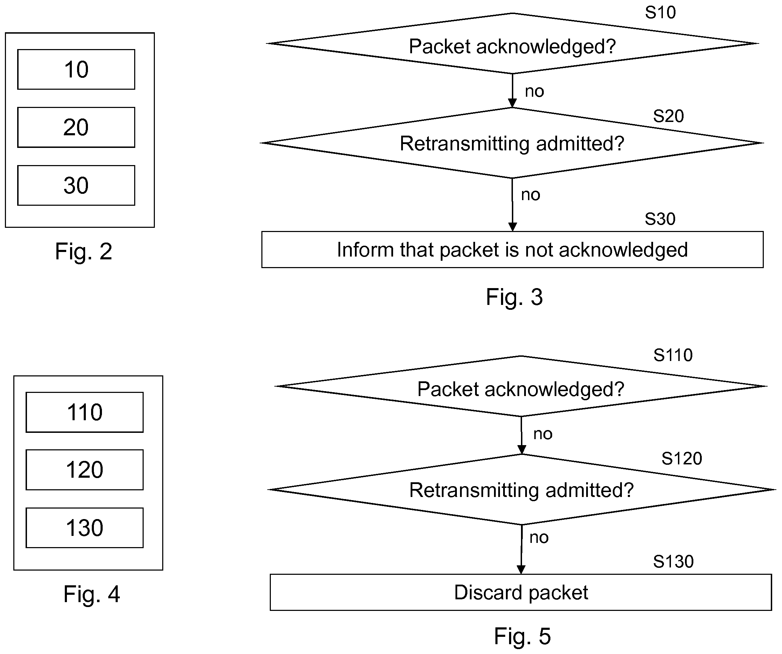

The examples of Figures 2 to 7 do not correspond to the present independent claims.

Fig. 2 shows an apparatus according to an example. The apparatus may be a sender of a packet, and in particular a terminal such as a UE or an element thereof. Fig. 3 shows a method according to an example. The apparatus according to Fig. 2 may perform the method of Fig. 3 but is not limited to this method. The method of Fig. 3 may be performed by the apparatus of Fig. 2 but is not limited to being performed by this apparatus.

The apparatus comprises monitoring means 10, checking means 20, and informing means 30.

The monitoring means 10 monitors if a sent packet is acknowledged as correctly received (S10). If the sent packet is not acknowledged as correctly received (S10 = "no"), the checking means 20 checks if retransmitting the sent packet at a time interval determined for retransmission is admitted (S20). If the retransmitting at the determined time interval is not admitted (S20 = "no"), the informing means 30 informs that the sent packet is not acknowledged as correctly received (S30). E.g., the informing means may inform by signaling such as signaling SI.

Fig. 4 shows an apparatus according to an example. The apparatus may be a sender of a packet, and in particular a terminal such as a UE or an element thereof. Fig. 5 shows a method according to an example. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises monitoring means 110, checking means 120, and discarding means 130.

The monitoring means 110 monitors if a sent packet is acknowledged as correctly received (S110). If the sent packet is not acknowledged as correctly received (S110 = "no"), the checking means 120 checks if retransmitting the sent packet at a time interval determined for retransmission is admitted (S120). If the retransmitting at the determined time interval is not admitted (S120 = "no"), the discarding means 130 discards the packet (S130). The discarding means 130 may discard the packet irrespective of an actual number of retransmissions of the packet. E.g., the discarding means 130 may set a number of retransmissions of the sent packet to a predefined maximum number irrespective of the actual number of retransmissions. The actual number of retransmissions indicates how often the packet has been retransmitted yet. The maximum number is a natural number of 1, 2, 3, or more. In addition, the apparatus may flush (empty) a buffer in which the sent packet is stored.

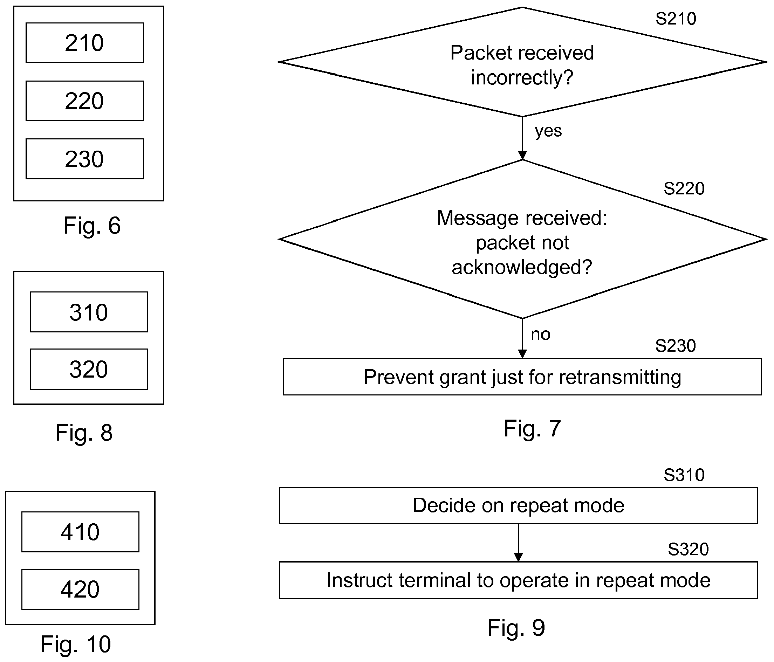

Fig. 6 shows an apparatus according to an example. The apparatus may be a base station such as a NB, an eNB or an element thereof. In particular, it may be a serving Base station. Fig. 7 shows a method according to an example. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises monitoring means 210, checking means 220, and preventing means 230.

The monitoring means 210 monitors if a packet from a sender was received incorrectly (S210). If the packet was received incorrectly (S210 = "yes"), the checking means 220 checks if a message is received that the packet is not acknowledged as to be correctly received (S220). If the message is not received (S220 = "no"), the preventing means 230 prevents a granting means from granting a time interval to the sender just for retransmitting the packet (S230). I.e., if the granting means will grant the time interval anyway to the sender for other reasons than retransmitting, it is not prevented from granting, but if the granting means does not intend to grant the time interval to the sender for other reasons, it will not grant the time interval for retransmission if the message is not received.

Fig. 8 shows an apparatus according to an embodiment of the invention. The apparatus may be a controller such as a RNC or an element thereof. Fig. 9 shows a method according to an embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises deciding means 310, and instructing means 320.

The deciding means 310 decides on a repeat mode a terminal has to perform for a sent packet for which the terminal does not receive an acknowledgement (S310). The repeat mode is selected out of a group of repeat modes. A repeat mode may be a HARQ mode. The group of repeat modes comprises at least two of
- retransmitting the packet at a predetermined time interval irrespective of whether the predetermined time interval is granted to the terminal (conventional HARQ mode),
- informing a base station that the acknowledgement was not received (HARQ mode, as described in 1) hereinabove), and
- discarding the packet (HARQ mode as described in 2) hereinabove).

The instructing means 320 instructs the terminal to perform the decided repeat mode (S320). In addition, in some embodiments, the apparatus may inform a base station (serving base station of the terminal) on the decided repeat mode (HARQ mode).

Fig. 10 shows an apparatus according to an embodiment of the invention. The apparatus comprises at least one processor 410, at least one memory 420 including computer program code, and the at least one processor, with the at least one memory and the computer program code, being arranged to cause the apparatus to at least perform at least one of the methods according to Figs. 3, 5, 7, and 9.

The time for retransmission may be determined as a fixed (predetermined) time after the initial transmission. However, in some embodiments of the invention, the time for retransmission may be determined based on other conditions such as network load etc. In these embodiments, the rule to determine the time for retransmission is predetermined and is known to both base station and UE.

Embodiments of the invention may be employed in a 3GPP network. They may be employed also in other mobile networks such as CDMA, EDGE, UMTS, LTE, LTE-A, WiFi networks, etc. In particular, they may be employed when HARQ is applied in a transmission from a sender to a receiver, and the receiver is responsible for scheduling resources to the sender.

A terminal may be a user equipment such as a mobile phone, a smart phone, a PDA, a laptop, a tablet PC, or any other device which may be connected to the respective mobile network. A base station may be a base station of the corresponding technology such as a NodeB, an eNodeB, an Access Point etc.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

According to the above description, it should thus be apparent that exemplary embodiments of the present invention provide, for example a base station such as a NB, an eNB, or a component thereof, an apparatus embodying the same, a method for controlling and/or operating the same, and computer program(s) controlling and/or operating the same as well as mediums carrying such computer program(s) and forming computer program product(s). Furthermore, according to the above description, it should thus be apparent that exemplary embodiments of the present invention provide, for example a terminal such as a UE or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. An apparatus comprising:
deciding means adapted to decide on a repeat mode out of a group of repeat modes a terminal has to perform for a sent packet for which the terminal does not receive an acknowledgment, wherein the group of repeat modes comprises at least two of:
retransmitting the packet at a predetermined time interval irrespective of whether the predetermined time interval is granted to the terminal,
informing a base station that the acknowledgment was not received, and
discarding the packet; and
instructing means adapted to instruct the terminal to perform the decided repeat mode.

2. The apparatus according to claim 1, further comprising informing means adapted to inform the base station on the decided repeat mode.

3. The apparatus according to any of claims 1 to 2, wherein the deciding means is adapted to decide based on at least one of a handover status of the terminal, a service type used by the terminal, a cell throughput of the base station, and a transmission delay between the terminal and the base station.

4. A method comprising:
deciding on a repeat mode out of a group of repeat modes a terminal has to perform for a sent packet for which the terminal does not receive an acknowledgment, wherein the group of repeat modes comprises at least two of:
retransmitting the packet at a predetermined time interval irrespective of whether the predetermined time interval is granted to the terminal,
informing a base station that the acknowledgment was not received, and
discarding the packet; and
instructing the terminal to perform the decided repeat mode.

5. The method according to claim 4, further comprising informing the base station on the decided repeat mode.

6. The method according to any of claims 4 to 5, wherein deciding on a repeat mode comprises deciding on a repeat mode based on at least one of a handover status of the terminal, a service type used by the terminal, a cell throughput of the base station, and a transmission delay between the terminal and the base station.

7. A computer program comprising a set of instructions which, when the program is executed by a computer, cause the computer to carry out the method according to any one of claims 4 to 6.

## Patentansprüche

1. Vorrichtung, die Folgendes umfasst:
Beschließungsmittel, die angepasst sind, einen Wiederholungsmodus einer Gruppe von Wiederholungsmodi zu beschließen, der von einem Endgerät für ein gesendetes Paket durchzuführen ist, für das das Endgerät keine Bestätigung empfangen hat, wobei die Gruppe von Wiederholungsmodi mindestens zwei von Folgendem umfasst:
Neuübertragen des Pakets in einem vorbestimmten Zeitintervall, unabhängig davon, ob das vorbestimmte Zeitintervall dem Endgerät gewährt ist,
Informieren einer Basisstation darüber, dass die Bestätigung nicht empfangen wurde, und Verwerfen des Pakets; und
Anweisungsmittel, die angepasst sind, das Endgerät anzuweisen, den beschlossenen Wiederholungsmodus durchzuführen.

2. Vorrichtung nach Anspruch 1, die ferner Informationsmittel umfasst, die angepasst sind, die Basisstation über den beschlossenen Wiederholungsmodus zu informieren.

3. Vorrichtung nach einem der Ansprüche 1 bis 2, wobei die Beschließungsmittel angepasst sind, auf Basis von mindestens einem eines Übergabestatus des Endgeräts, einer vom Endgerät verwendeten Dienstart, einem Zelldurchsatz der Basisstation und einer Übertragungsverzögerung zwischen dem Endgerät und der Basisstation zu beschließen.

4. Verfahren, das Folgendes umfasst:
Beschließen eines Wiederholungsmodus einer Gruppe von Wiederholungsmodi, der von einem Endgerät für ein gesendetes Paket durchzuführen ist, für das das Endgerät keine Bestätigung empfangen hat, wobei die Gruppe von Wiederholungsmodi mindestens zwei von Folgendem umfasst:
Neuübertragen des Pakets in einem vorbestimmten Zeitintervall, unabhängig davon, ob das vorbestimmte Zeitintervall dem Endgerät gewährt ist,
Informieren einer Basisstation darüber, dass die Bestätigung nicht empfangen wurde, und
Verwerfen des Pakets; und
Anweisen des Endgeräts, den beschlossenen Wiederholungsmodus durchzuführen.

5. Verfahren nach Anspruch 4, das ferner das Informieren der Basisstation über den beschlossenen Wiederholungsmodus umfasst.

6. Verfahren nach einem der Ansprüche 4 bis 5, wobei das Beschließen eines Wiederholungsmodus das Beschließen eines Wiederholungsmodus auf Basis von mindestens einem eines Übergabestatus des Endgeräts, einer vom Endgerät verwendeten Dienstart, einem Zelldurchsatz der Basisstation und einer Übertragungsverzögerung zwischen dem Endgerät und der Basisstation umfasst.

7. Computerprogramm, das einen Satz von Anweisungen umfasst, die, wenn das Programm von einem Computer ausgeführt wird, den Computer veranlassen, das Verfahren nach einem der Ansprüche 4 bis 6 umzusetzen.

## Revendications

1. Appareil comprenant :
des moyens de décision adaptés pour décider d'un mode de répétition parmi un groupe de modes de répétition qu'un terminal doit réaliser pour un paquet envoyé pour lequel le terminal ne reçoit pas d'accusé de réception, dans lequel le groupe de modes de répétition comprend au moins deux des actions suivantes :
retransmettre le paquet à un intervalle de temps prédéterminé, que l'intervalle de temps prédéterminé soit accordé ou non au terminal,
informer une station de base que l'accusé de réception n'a pas été reçu, et
rejeter le paquet ; et
des moyens d'instruction adaptés pour ordonner au terminal de réaliser le mode de répétition décidé.

2. Appareil selon la revendication 1, comprenant en outre des moyens d'information adaptés pour informer la station de base du mode de répétition décidé.

3. Appareil selon l'une des revendications 1 et 2, dans lequel les moyens de décision sont adaptés pour décider en fonction d'au moins un parmi un statut de transfert intercellulaire du terminal, un type de service utilisé par le terminal, un débit cellulaire de la station de base, et un délai de transmission entre le terminal et la station de base.

4. Procédé comprenant :
le choix d'un mode de répétition parmi un groupe de modes de répétition qu'un terminal doit réaliser pour un paquet envoyé pour lequel le terminal ne reçoit pas d'accusé de réception, dans lequel le groupe de modes de répétition comprend au moins deux des actions suivantes :
retransmettre le paquet à un intervalle de temps prédéterminé, que l'intervalle de temps prédéterminé soit accordé ou non au terminal,
informer une station de base que l'accusé de réception n'a pas été reçu, et
rejeter le paquet ; et
une instruction ordonnant au terminal de réaliser le mode de répétition décidé.

5. Procédé selon la revendication 4, comprenant en outre l'information de la station de base du mode de répétition décidé.

6. Procédé selon l'une des revendications 4 et 5, dans lequel le choix d'un mode de répétition comprend le choix d'un mode de répétition en fonction d'au moins un parmi un statut de transfert intercellulaire du terminal, un type de service utilisé par le terminal, un débit cellulaire de la station de base, et un délai de transmission entre le terminal et la station de base.

7. Programme informatique comprenant un ensemble d'instructions qui, lorsque le programme est exécuté par un ordinateur, amènent l'ordinateur à mettre en œuvre le procédé selon l'une des revendications 4 à 6.
